# EUROPÄISCHE PATENTSCHRIFT

(11) **EP 1 056 630 B1**
(45) Veröffentlichungstag und Bekanntmachung des Hinweises auf die Patenterteilung: **05.10.2005**
(21) Anmeldenummer: 99964470.1
(22) Anmeldetag: 28.12.1999
(51) Int. Cl.: B60T 8/00

(54) **VORRICHTUNG UND VERFAHREN ZUR STABILISIERUNG EINES FAHRZEUGES**
DEVICE AND METHOD FOR STABILIZING A VEHICLE
DISPOSITIF ET PROCEDE DE STABILISATION POUR VEHICULE

(30) Priorität: 29.12.1998 DE 19859966
(43) Veröffentlichungstag der Anmeldung: 06.12.2000
(73) Patentinhaber: ROBERT BOSCH GMBH, 70442 Stuttgart (DE)
(72) Erfinder: WETZEL, Gabriel, D-70435 Stuttgart (DE); FAYE, Ian, D-70192 Stuttgart (DE); LEIMBACH, Klaus-Dieter, D-71696 Moeglingen (DE); HECKER, Falk, D-71706 Markgroeningen (DE); JUNDT, Oliver, D-74354 Besigheim (DE); SCHRAMM, Herbert, D-71229 Leonberg (DE)
(86) Internationale Anmeldenummer: PCT/DE1999/004119
(87) Internationale Veröffentlichungsnummer: WO 2000/038965

(56) Entgegenhaltungen:
- EP-A- 0 385 648
- EP-A- 0 943 514
- DE-A- 19 724 092
- US-A- 5 415 466

## Beschreibung

### Stand der Technik

Die Erfindung betrifft eine Vorrichtung und ein Verfahren zur Stabilisierung eines Fahrzeuges.

Die US 5,415,466 beschreibt ein Verfahren und eine Vorrichtung zur Einstellung der Bremskräfte an den unterschiedlichen Rädern eines Fahrzeugs, so dass sich die Bremswirkung auf alle Räder des Fahrzeugs gleichmäßig verteilt. Dazu werden für die Bremsen jeder Achse relative Bremsfaktoren bestimmt. Während einer Fahrzeugverzögerung mit einem vorgegebenen Wert werden dazu die Bremsdruckwerte in den Radbremsen der unterschiedlichen Achsen gemessen und aufgezeichnet. Über die Lösung eines Gleichungssystems werden daraus die relativen Bremsfaktoren bestimmt. Nachdem die Bremsfaktoren bekannt sind, wird damit die Bremskraftverteilung zwischen den unterschiedlichen Rädern während darauffolgender Bremsvorgänge modifiziert.

Aus dem SAE-Paper 973284 "Vehicle Dynamics Control for Commercial Vehicles" ist eine Vorrichtung zur Stabilisierung eines als Fahrzeuggespann ausgeführten Nutzfahrzeuges, welches aus einem Zugfahrzeug und einem Auflieger besteht, bekannt. Bei dieser Vorrichtung wird der Schwimmwinkel und die Gierrate des Zugfahrzeuges und der sich zwischen dem Zugfahrzeug und dem Auflieger einstellende Knickwinkel geregelt. Hierzu wird jeweils eine Regelabweichung zwischen den Istwerten und den Sollwerten für den Schwimmwinkel, die Gierrate und den Knickwinkel ermittelt. In Abhängigkeit dieser Regelabweichungen werden Motoreingriffe und/oder Bremseneingriffe zur Stabilisierung des Fahrzeuggespannes durchgeführt.

Aus der in der Automobiltechnischen Zeitschrift (ATZ) 96, 1994, Heft 11, auf den Seiten 674 bis 689 erschienen Veröffentlichung "FDR - Die Fahrdynamikregelung von Bosch" wird eine entsprechende Stabilisierungsvorrichtung für Personenkraftwagen beschrieben. Bei dieser Stabilisierungsvorrichtung werden bei der Regelung lediglich die Gierrate und der Schwimmwinkel des Fahrzeuges berücksichtigt.

Weder die aus dem Stand der Technik bekannte Vorrichtung zur Stabilisierung des Fahrzeuggespannes noch die aus dem Stand der Technik bekannte Vorrichtung zur Stabilisierung des Personenkraftwagens sieht vor, die zeitlichen Verläufe der Sollwerte für die zu regelnden Größen an das Fahrzeugverhalten anzupassen. Dadurch ergibt sich folgender Nachteil: Führt der Fahrer eines Fahrzeuges beispielsweise eine Lenkbewegung aus, so vergeht erfahrungsgemäß eine gewisse Zeitdauer, bis das Fahrzeug dieser Lenkbewegung folgt und beispielsweise die gewollte Kurvenfahrt ausführt, d.h. den aufgrund der Lenkbewegung initialisierten stationären bzw. eingeschwungenen Zustand erreicht bzw. einnimmt. Wenn nun die Sollwerte mittels entsprechender Fahrzeugmodelle, die den stationären Zustand beschreiben, in Abhängigkeit des Lenkwinkels ohne zeitliche Anpassung ermittelt werden, so liegen von Anfang an für die Sollwerte die Werte des stationären Zustandes vor. Da aber der momentane Istzustand des Fahrzeuges, zumindest unmittelbar nach Einleitung der Lenkbewegung, noch nicht dem stationären Zustand entspricht, so liegt eine Regelabweichung vor, die fälschlicherweise zu Regeleingriffen führt, die nicht erforderlich sind, und die bei einer Anpassung der zeitlichen Verläufe der Sollwerte an das Fahrzeugverhalten nicht ausgeführt werden würden.

Folglich besteht eine Aufgabe der vorliegenden Erfindung darin, bestehende Vorrichtungen bzw. Verfahren zur Stabilisierung von Fahrzeugen bzgl. der Bildung der Regelabweichung zu verbessern.

Diese Aufgabe wird durch die Merkmale des Anspruchs 1 bzw. durch die des Anspruchs 15 gelöst.

### Vorteile der Erfindung

Die erfindungsgemäße Vorrichtung enthält erste Ermittlungsmittel, mit denen wenigstens zwei Fahrzeugbewegungsgrößen, die die Fahrzeugbewegung, insbesondere in Fahrzeugquerrichtung, beschreiben, ermittelt werden. Diese Fahrzeugbewegungsgrößen entsprechen den vorstehend aufgeführten Istwerten. Darüber hinaus enthält die Vorrichtung zweite Ermittlungsmittel, mit denen für jede der Fahrzeugbewegungsgrößen eine charakteristische Größe, die dem vorstehend erwähnten Sollwert entspricht, ermittelt wird. Die charakteristischen Größen beschreiben das vom Fahrer gewünschte Fahrzeugverhalten. Ferner sind Reglermittel vorhanden, mit denen wenigstens in Abhängigkeit der Fahrzeugbewegungsgrößen und der charakteristischen Größen Eingriffsgrößen ermittelt werden. Diese Eingriffsgrößen werden Aktuatormitteln zur Durchführung von wenigstens Bremseneingriffen und/oder Motoreingriffen, mit denen das Fahrzeug stabilisiert wird, zugeführt.

Um eine Verbesserung bzgl. der Bildung der Regelabweichung zu erzielen, weisen die zweiten Ermittlungsmittel Anpassungsmittel auf, mit denen die zeitlichen Verläufe der charakteristischen Größen an das Fahrzeugverhalten angepaßt werden. D.h. bei der Bildung der charakteristischen Größen wird berücksichtigt, daß das Fahrzeug nicht sofort den stationären Zustand einnimmt, sondern diesen erst nach einer gewissen Zeitdauer einnimmt.

Da die charakteristischen Größen auch, d.h. nach einer gewissen Zeitdauer, den stationären Zustand des Fahrzeuges beschreiben sollen, enthalten die zweiten Ermittlungsmittel vorteilhafterweise Bestimmungsmittel, mit denen Endwerte für die charakteristischen Größen ermittelt werden. Diese Endwerte entsprechen den Werten der Fahrzeugbewegungsgrößen, die in dem stationären Zustand des Fahrzeuges vorliegen. Die Endwerte werden den Anpassungsmitteln zugeführt und die charakteristischen Größen werden in Abhängigkeit dieser Endwerte ermittelt.

Es hat sich als vorteilhaft erwiesen, daß die Endwerte wenigstens in Abhängigkeit einer Lenkwinkelgröße, die den für das Fahrzeug eingestellten Lenkwinkel beschreibt, und einer Geschwindigkeitsgröße, die die Geschwindigkeit des Fahrzeuges beschreibt, ermittelt werden. Bei der Geschwindigkeit des Fahrzeuges handelt es sich vorteilhafterweise um die Geschwindigkeit des Zugfahrzeuges.

Aus den vorstehenden Überlegungen folgt, daß die zeitlichen Verläufe der charakteristischen Größen dergestalt mit den Anpassungsmitteln an das Fahrzeugverhalten angepaßt werden, daß die charakteristischen Größen vorteilhafterweise erst nach einer vorgegebenen, für das Fahrzeug charakteristischen Zeitdauer, den jeweiligen Endwert erreichen.

Bzgl. der für das Fahrzeug charakteristischen Zeitdauer haben sich zwei Vorgehensweisen als vorteilhaft erwiesen: Entweder ist die Zeitdauer fest vorgegeben oder die Zeitdauer wird wenigstens in Abhängigkeit einer das Fahrzeugverhalten beschreibenden Größe ermittelt.

Für die Anpassung der zeitlichen Verläufe der charakteristischen Größen bieten sich vorteilhafterweise ebenfalls zwei Vorgehensweisen an. Entweder werden mit den Anpassungsmitteln die zeitlichen Verläufe aller charakteristischen Größen in gleicher Weise an das Fahrzeugverhalten angepaßt. In diesem Fall ist die Zeitdauer, nach der die charakteristischen Größen den jeweiligen Endwert erreichen, für alle charakteristischen Größen gleich. Diese Vorgehensweise ist dann anwendbar, wenn das Fahrzeug für sämtliche Fahrzeugbewegungsgrößen, für die die Regelung durchgeführt wird, das selbe zeitliche Verhalten, was das Einnehmen des stationären Zustandes angeht, zeigt. Oder es wird mit den Anpassungsmitteln der zeitliche Verlauf jeder einzelnen charakteristischen Größe gesondert an das Fahrzeugverhalten angepaßt. In diesem Fall ist die Zeitdauer für jede charakteristische Größe verschieden. Diese Vorgehensweise ist dann erforderlich, wenn das Fahrzeug für die Fahrzeugbewegungsgrößen, für die die Regelung durchgeführt wird, unterschiedliches zeitliches Verhalten zeigt.

Vorteilhafterweise sind die Anpassungsmittel als Filtermittel ausgebildet, mit denen über die Vorgabe einer Filterkonstante die zeitlichen Verläufe der charakteristischen Größen beeinflußt werden.

Von besonderem Vorteil hat es sich erwiesen, wenn als Filtermittel ein Allpaßfilter verwendet wird. Mit Hilfe eines Allpaßfilters kann die Phase und somit der zeitliche Verlauf der charakteristischen Größe verändert werden, ohne daß dabei der Wert, d.h. die Amplitude der charakteristischen Größe verändert wird. Entsprechendes gilt, wenn als Filtermittel ein Tiefpaßfilter verwendet wird, welches eine sehr kleine Grenzfrequenz aufweist.

Wie bereits ausgeführt, werden die Endwerte wenigstens in Abhängigkeit einer Lenkwinkelgröße und einer Geschwindigkeitsgröße ermittelt. Hierfür kommen Fahrzeugmodelle bzw. mathematische Modelle zum Einsatz. Dabei wird ein Teil der in diesen Modellen verwendeten Parameter wenigstens in Abhängigkeit von Fahrzeuggrößen und/oder Fahrzeugparametern ermittelt.

Vorteilhafterweise gehen als Fahrzeuggrößen wenigstens eine Massengröße und/oder wenigstens eine Schwerpunktslagengröße ein. Somit ist sichergestellt, daß bei der Ermittlung der charakteristischen Größen der Einfluß unterschiedlicher Beladung berücksichtigt wird. D.h. es werden Veränderungen des Fahrzeugzustandes erkannt und in der Regelung berücksichtigt. Bei einem Fahrzeuggespann werden vorteilhafterweise sowohl für das Zugfahrzeug als auch für den Anhänger bzw. Auflieger jeweils eine Massengröße bzw. eine Schwerpunktslagengröße ermittelt. Als Fahrzeugparameter gehen Geometrieparameter und/oder Reifenseitensteifigkeitsgrößen ein, da beide auch einen nicht unerheblichen Einfluß auf das Fahrzeugverhalten haben.

Die in der Vorrichtung enthaltenen Reglermittel weisen verschiedene Einzelregler auf. Dabei ist solch ein Reglerkonzept realisiert, bei dem zumindest einer dieser Einzelregler die anderen beeinflußt, und/oder von denen einer dieser Regler den anderen übergeordnet ist. Dieses Konzept hat den Vorteil, daß für die beeinflußten bzw. die untergeordneten Einzelregler auf bewährte Einzelregler zurückgegriffen werden kann.

Ferner hat es sich als vorteilhaft erwiesen, wenn zumindest für einen Teil der Endwerte eine Begrenzung ihres Wertes durchgeführt wird. Die Begrenzung wird in Abhängigkeit einer Querbeschleunigungsgröße, die die auf das Fahrzeug wirkende Querbeschleunigung beschreibt und/oder in Abhängigkeit einer Längsbeschleunigungsgröße, die die auf das Fahrzeug wirkende Längsbeschleunigung beschreibt, oder in Abhängigkeit einer Reibwertgröße, die den momentan vorliegenden Reibwert zwischen Fahrbahn und Reifen beschreibt, oder in Abhängigkeit von Radkraftgrößen, die die auf die Räder des Fahrzeuges wirkenden Kräfte beschreiben, durchgeführt.

Die erfindungsgemäße Vorrichtung kann sowohl bei Einzelfahrzeugen als auch bei Fahrzeuggespannen eingesetzt werden. Handelt es sich bei dem Fahrzeug, bei dem die erfindungsgemäße Vorrichtung eingesetzt wird, um ein Fahrzeuggespann, welches aus einem Zugfahrzeug und einem Anhänger bzw. Auflieger besteht, so werden in diesem Fall mit den ersten Ermittlungsmitteln drei Fahrzeugbewegungsgrößen ermittelt. Zwei dieser Fahrzeugbewegungsgrößen beschreiben das Verhalten des Zugfahrzeuges und eine dieser Fahrzeugbewegungsgrößen beschreibt die Lage und/oder das Verhalten des Anhängers bzw. Aufliegers bzgl. des Zugfahrzeuges. Konkret wird in diesem Fall als eine erste Fahrzeugbewegungsgröße eine Giergeschwindigkeitsgröße, die die Giergeschwindigkeit des Zugfahrzeuges beschreibt, und/oder als eine zweite Fahrzeugbewegungsgröße eine Schwimmwinkelgröße, die den Schwimmwinkel des Fahrzeuges beschreibt, und/oder als eine dritte Fahrzeugbewegungsgröße eine Knickwinkelgröße, die den sich zwischen Zugfahrzeug und Anhänger bzw. Auflieger einstellenden Knickwinkel beschreibt, ermittelt.

Handelt es sich bei dem Fahrzeug, bei dem die erfindungsgemäße Vorrichtung eingesetzt wird, um ein Einzelfahrzeug, so werden als Fahrzeugbewegungsgrößen eine Giergeschwindigkeitsgröße und/oder eine Schwimmwinkelgröße ermittelt.

An dieser Stelle sei festgehalten, wie der Schwimmwinkel eines Fahrzeuges geometrisch definiert ist: Der Schwimmwinkel eines Fahrzeuges ist der Winkel zwischen der Richtung der Fahrzeuggeschwindigkeit im Schwerpunkt des Fahrzeuges und der Fahrzeuglängsachse.

Von Vorteil kann es auch sein, wenn die erfindungsgemäße Vorrichtung eine Anhänger- bzw. Aufliegererkennung enthält, mit der selbständig erkannt wird, ob ein Anhänger bzw. Auflieger an das Zugfahrzeug angekoppelt ist.

Vorteilhafterweise bieten sich zur Stabilisierung des Fahrzeuges neben den bereits aufgeführten Bremseneingriffen und Motoreingriffen auch Eingriffe in das Fahrwerk oder das in das Getriebe an.

Weitere Vorteile sowie vorteilhafte Ausgestaltungen können den Unteransprüchen, wobei auch eine beliebige Kombination der Unteransprüche denkbar ist, der Zeichnung sowie der Beschreibung des Ausführungsbeispiels entnommen werden.

### Zeichnung

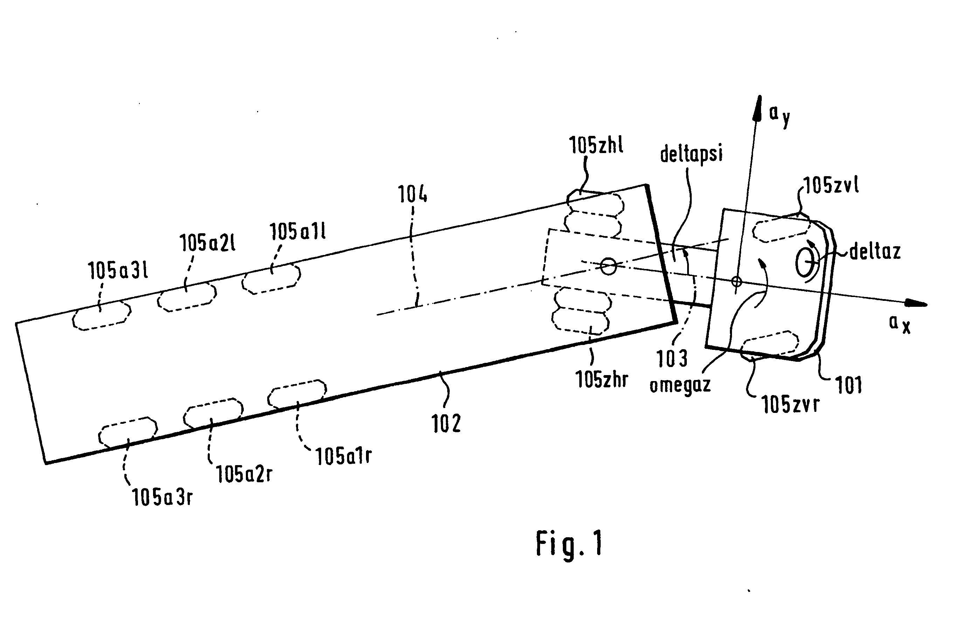

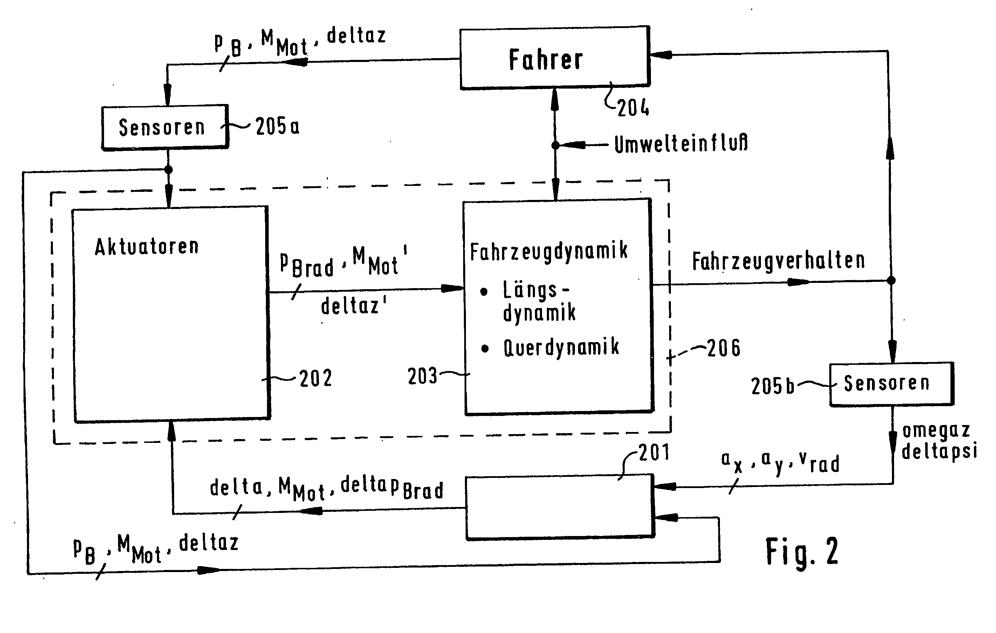

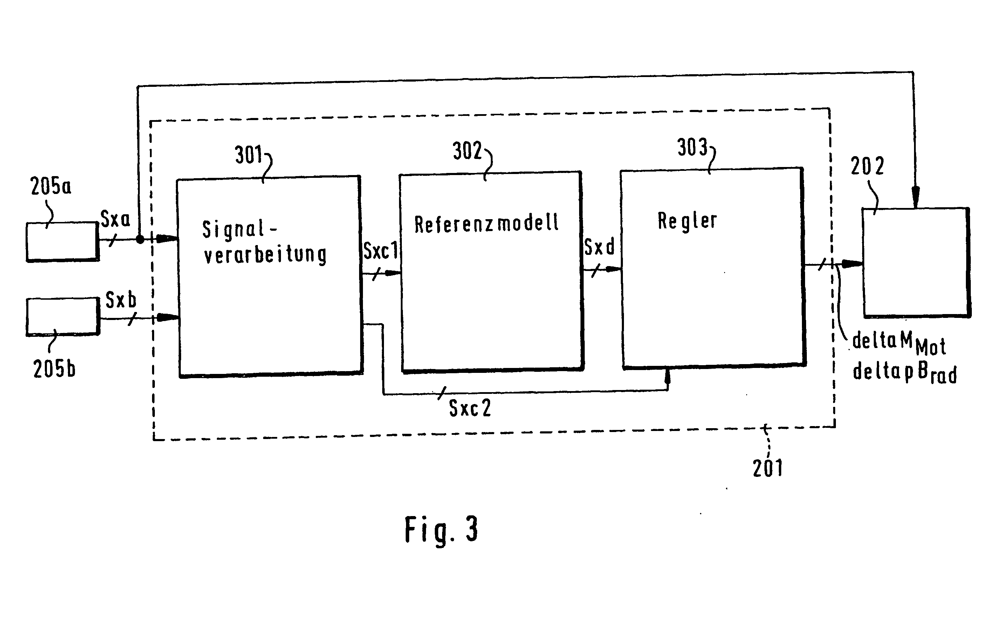

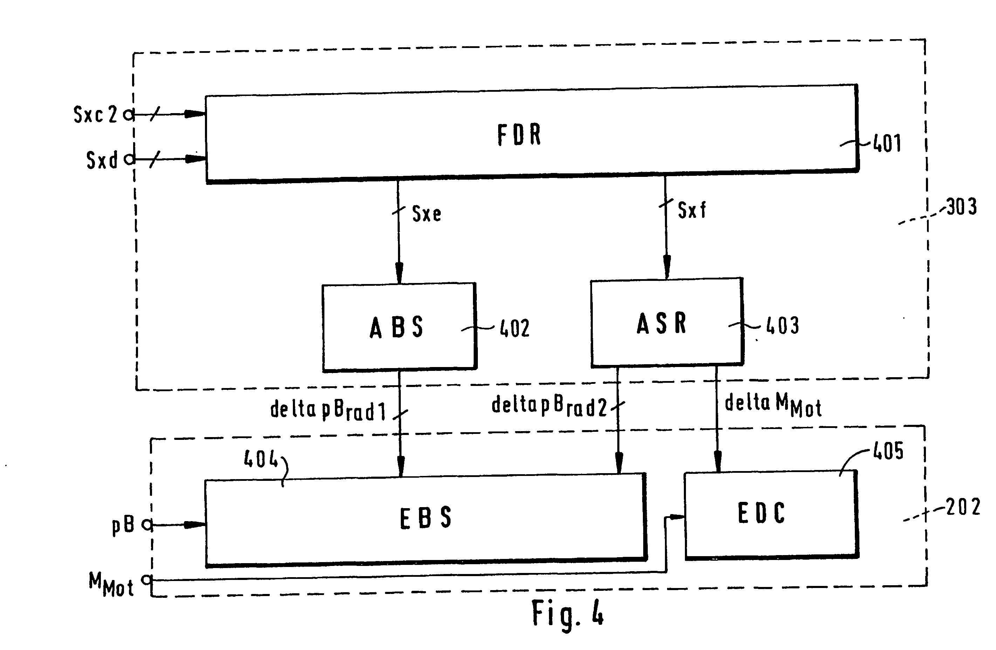

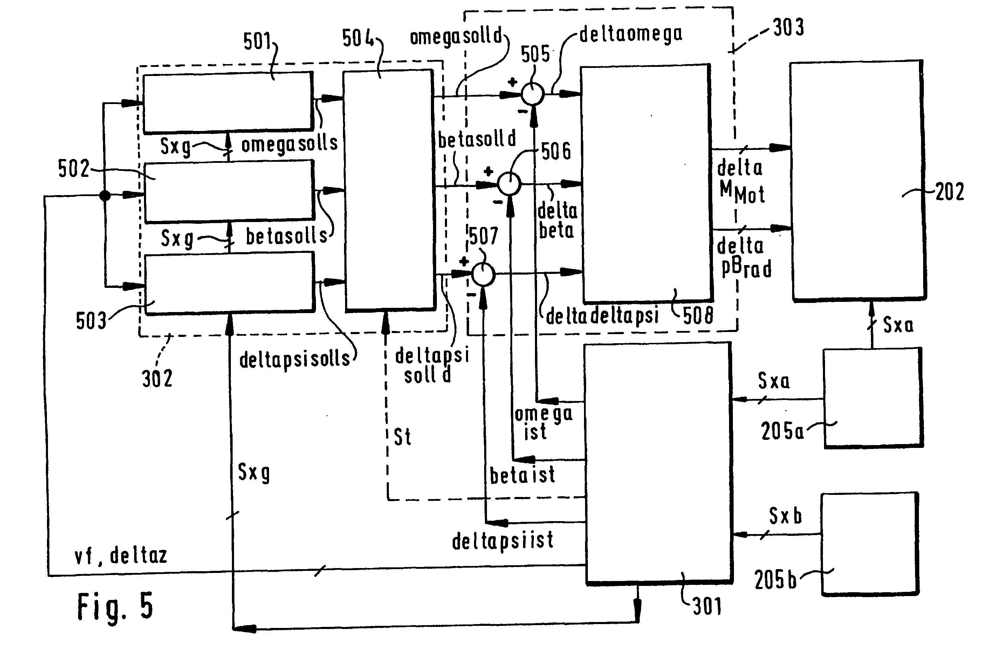

Die Zeichnung besteht aus den Figuren 1 bis 5. Figur 1 zeigt ein Fahrzeuggespann, bei dem die erfindungsgemäße Vorrichtung eingesetzt wird. In Figur 2 ist das der Vorrichtung zugrundeliegende Regelungsmodell dargestellt. In den Figuren 3 und 5 sind in unterschiedlichen Detailliertheitsgraden die der Erfindung zugrundeliegende Regelstruktur dargestellt. Figur 4 zeigt einen Aufbau des Reglers.

### Ausführungsbeispiel

Figur 1 zeigt ein Fahrzeuggespann, welches aus einem Zugfahrzeug 101 und einem Auflieger 102 besteht. Das Zugfahrzeug 101 und der Auflieger 102 stehen über nicht dargestelltes Drehgelenk, für gewöhnlich ein Königszapfen, in Wirkverbindung.

Dem Ausführungsbeispiel liegt ein Sattelzug als Fahrzeuggespann zugrunde. Dies soll keine Einschränkung darstellen. Die erfindungsgemäße Vorrichtung ist in entsprechender Weise auch für ein Fahrzeuggespann anwendbar, welches aus einem Zugfahrzeug und einem Deichselanhänger besteht. Ebenso ist die erfindungsgemäße Vorrichtung in entsprechender Weise auch für ein Einzelfahrzeug anwendbar.

Das Zugfahrzeug 101 weist Räder 105zij auf, denen Aktuatoren zur Durchführung von Bremseingriffe zugeordnet sind. Bei der Schreibweise 105zij gibt der Index z an, daß es sich um die Räder des Zugfahrzeuges handelt. Der Index i gibt an, ob es sich um eine Vorderachse (v) oder um eine Hinterachse (h) handelt. Durch den Index j wird angezeigt, ob es sich um ein rechtes (r) bzw. um ein linkes (l) Fahrzeugrad handelt. Der Auflieger 102 weist Räder 105axj auf. Mit dem Index a wird angezeigt, daß es sich um Räder des Aufliegers handelt. Der Index x zeigt an, zu welcher Achse des Aufliegers das jeweilige Rad gehört. Je näher die Fahrzeugachse der rückwärtigen Berandung des Aufliegers ist, desto höher ist der Wert dieses Indexes. Der Index j hat dieselbe Bedeutung wie im Zusammenhang mit dem Zugfahrzeug. Bei allen Größen bzw. Komponenten, bei denen die Indizes a, i, j, x sowie z verwendet werden, haben sie dieselbe Bedeutung.

An dieser Stelle sei bemerkt, daß die in Figur 1 dargestellte Anzahl der Räder des Zugfahrzeuges bzw. des Aufliegers sowie die in Figur 1 dargestellte Anzahl der Achsen keine einschränkende Wirkung auf die erfindungsgemäße Vorrichtung hat. In entsprechender Weise können auch anstatt der in Figur 1 dargestellten Einzelräder teilweise Zwillingsräder verwendet werden.

In Figur 1 ist für das Zugfahrzeug dessen Längsachse 103 eingezeichnet. In entsprechender Weise ist für den Auflieger dessen Längsachse 104 eingezeichnet. Wie Figur 1 zu entnehmen ist, schließen die beiden Längsachsen 103 bzw. 104 einen Winkel deltapsi ein, der als Knickwinkel bezeichnet wird. Je nach dem, wie weit der Auflieger bezogen auf das Zugfahrzeug ausgelenkt ist, ist der Knickwinkel deltapsi unterschiedlich groß.

Außerdem sind in Figur 1 das Fahrverhalten des Zugfahrzeuges beschreibende Größen, wie die Längsbeschleunigung ax, die Querbeschleunigung ay, die Gierrate omegaz sowie der für das Zugfahrzeug eingestellte Lenkwinkel deltaz eingezeichnet.

Nachfolgend wird auf Figur 2 eingegangen, in der das der erfindungsgemäßen Vorrichtung zugrundeliegende Regelungsmodell dargestellt ist. Dieses Regelungsmodell enthält zwei Regelschleifen, eine übergeordnete, die ausgehend vom Fahrer 204 gebildet wird und eine untergeordnete, die ausgehend von der erfindungsgemäßen Regelstruktur 201 gebildet wird.

Mit 206 ist ein Fahrzeug dargestellt. Wie Figur 2 zu entnehmen ist, wirken auf das Fahrzeug unter anderem Umwelteinflüsse, wie beispielsweise Seitenwind, Fahrbahnbeschaffenheiten oder der Fahrbahnverlauf ein. Diese Umwelteinflüsse erfährt auch der Fahrer 204. Durch diese Umwelteinflüsse wird das Fahrzeugverhalten beeinflußt. Weitere Einflußnahmen werden im folgenden noch vorgestellt. Das Fahrzeugverhalten, beispielsweise das Wanken des Fahrzeuges bei Seitenwind, erfährt auch der Fahrer. Gleichzeitig wird das Fahrzeugverhalten auch durch Sensoren 205b erfaßt. Dabei sollen in erster Linie mit Hilfe eines Gierratensensors die Gierrate omegaz des Zugfahrzeuges, mit Hilfe eines Querbeschleunigungssensors die Querbeschleunigung ay des Zugfahrzeuges, mit Hilfe von Raddrehzahlsensoren die Radgeschwindigkeiten vrad sowohl der Räder des Zugfahrzeuges als auch der des Aufliegers sowie mit Hilfe eines geeigneten Sensormittels auch der Knickwinkel deltapsi erfaßt werden. Die Längsbeschleunigung ax des Zugfahrzeuges kann entweder in bekannter Weise aus den Radgeschwindigkeiten ermittelt oder mit Hilfe eines geeigneten Beschleunigungssensors erfaßt werden. Die mit Hilfe der Sensoren 205b erfaßten Größen werden der Regelstruktur 201 zugeführt.

Aufgrund der Umwelteinflüsse und des Fahrzeugverhaltens, welche der Fahrer erfährt bzw. welche auf den Fahrer wirken, gibt er durch Betätigung des Lenkrades einen Lenkwinkel deltaz, durch Betätigung des Gaspedals ein Motormoment MMot und durch Betätigung des Bremspedals einen Vordruck PB vor. Diese vom Fahrer vorgegebenen Größen werden mit Hilfe von Sensoren 205a erfaßt. Dabei wird der Lenkwinkel beispielsweise mit Hilfe eines Lenkwinkelsensors erfaßt. Das vom Fahrer eingestellte Motormoment kann aus der Gaspedalstellung, die beispielsweise mit Hilfe eines geeigneten Wegsensors oder Potentiometers erfaßt wird, hergeleitet werden. Der vom Fahrer eingestellte Vordruck wird mit Hilfe eines Drucksensors erfaßt. Die mit Hilfe der Sensoren 205a erfaßten Größen werden sowohl den im Fahrzeug 206 enthaltenen Aktuatoren 202 als auch der Regelstruktur 201 zugeführt.

Der Block 202 enthält verschiedene Aktuatoren. Zum einen enthält er den Rädern des Zugfahrzeuges bzw. den Rädern des Aufliegers zugeordnete Bremsen. Zum anderen enthält er Mittel, mit denen der Vortrieb beeinflußbar ist, d.h. mit denen beispielsweise Motoreingriffe durchführbar sind. Je nachdem, um welche Art von Brennkraftmaschine es sich handelt, sind dies Mittel zur Beeinflussung des Drosselklappenwinkels, des Zündzeitpunktes oder der zugeführten Kraftstoffeinspritzmenge. Darüber hinaus können die Aktuatoren auch Mittel zur Beeinflussung der Lenkung enthalten, was in Figur 2 dadurch angedeutet ist, daß Block 202 eine Größe deltaz' an den Block 203 ausgibt. Außerdem kann der Block 202 auch einen Retarder umfassen.

Die Regelstruktur 201 ermittelt in Abhängigkeit der ihr zugeführten Größen und gemäß der in ihr implementierten Regelung Größen deltaMMot sowie deltaPBrad, die ebenfalls der Aktuatorik 202 zugeführt werden. Dabei wird in Abhängigkeit der Größe deltaMMot der Vortrieb und in Abhängigkeit der Größe deltaPBrad die Bremsen einzelner Räder beeinflußt. Hierbei ist folgende Vorgehensweise vorgesehen: Nimmt der Fahrer Eingriffe vor, d.h. sind die Größen PB, MMot bzw. deltaz vorhanden, so werden im Block 202 diesen Größen die von der Regelstruktur 201 erzeugten Größen beispielsweise additiv überlagert. Liegen dagegen keine Eingriffe des Fahrers vor, d.h. liegen keine Größen PB, MMot bzw. deltaz vor, so werden die Eingriffe lediglich in Abhängigkeit der von der Regelstruktur 201 erzeugten Größen deltaMMot bzw. deltaPBrad durchgeführt.

Mit der Zuführung der Größen PBrad, MMot' sowie deltaz' ausgehend vom Block 202 auf den Block 203 wird angedeutet, daß durch die mit Hilfe der Aktuatoren 202 durchgeführten Eingriffe die Fahrzeugdynamik, genauer die Längs- bzw. die Querdynamik des Fahrzeuges beeinflußt wird. Durch die mit dem Strich versehene Schreibweise Mmot' bzw. deltaz' wird angedeutet, daß die von den Aktuatoren ausgeführten Eingriffe eventuell andere sein können als die vom Fahrer vorgegebenen. Sofern das Fahrzeug mit einem Retarder ausgestattet ist, können mit der Aktuatorik 202 auch Retardereingriffe zur Beeinflussung der Fahrzeugdynamik durchgeführt werden.

An dieser Stelle sei auf folgendes hingewiesen: Die bei den Größen PBrad sowie deltaPBrad verwendete Bezeichnung "rad" weist darauf hin, daß einzelne Räder individuell beeinflußt werden können. Darüber hinaus handelt es sich bei Figur 2 um eine schematische Darstellung zur Beschreibung des der erfindungsgemäßen Vorrichtung zugrundeliegenden Regelungsmodells. D.h. einzelne der in Figur 2 dargestellten Blöcke entsprechen nicht direkt einem technischen Äquivalent. Dies gilt beispielsweise für den Block 203.

Im Zusammenhang mit Figur 2 ist auch denkbar, daß ausgehend von der Regelstruktur 201 Eingriffe in ein Lenksystem durchgeführt werden. Auf eine entsprechende Darstellung in Figur 2, d.h. auf eine entsprechende Ausgabe von Größen durch die Regelstruktur wurde allerdings verzichtet. In den noch zu beschreibenden Figuren 3 bis 5 wurde auf die Berücksichtigung eines Lenksystems verzichtet. Dies soll allerdings keine Einschränkung darstellen. Es können durchaus auch solche Regelstrukturen zum Einsatz kommen, die eine solche Einflußnahme vorsehen.

In Figur 3 ist die Regelstruktur 201 detaillierter dargestellt. Die mit Hilfe der Sensoren 205a erzeugten Signale bzw. Größen Sxa, die den Fahrerwunsch darstellen, werden sowohl einem Block 301 als auch den Aktuatoren 202 zugeführt. Die abkürzende Schreibweise Sxa steht dabei stellvertretend für die Signale bzw. Größen, die Figur 2 im Zusammenhang mit den Sensoren 205a zu entnehmen sind. Die mit Hilfe der Sensoren 205b erzeugten Signale bzw. Größen Sxb, die das Fahrzeugverhalten darstellen, werden dem Block 301 zugeführt. Die abkürzende Schreibweise Sxb steht in diesem Fall für die Signale bzw. Größen, die Figur 2 im Zusammenhang mit den Sensoren 205b zu entnehmen sind.

Block 301 stellt die in der Regelstruktur 201 enthaltene Signalverarbeitung dar, die Filtermittel und Schätzmittel umfaßt. Mit Hilfe der Filtermittel wird zumindest ein Teil der mit den Sensoren 205a bzw. 205b erfaßten Signale bzw. Größen bearbeitet. Hierbei werden die Signale bzw. Größen zur Unterdrückung von Störungen tiefpaßgefiltert. Außerdem wird ein Teil der Signale bzw. Größen, sofern für das Regelkonzept erforderlich, durch eine entsprechende Filterung differenziert. Mit Hilfe der Schätzmittel werden Größen, die für die Durchführung der Regelung erforderlich sind bzw. die bei der Regelung berücksichtigt werden, ermittelt. Hierbei handelt es sich um folgende Größen: Es werden Massengrößen, die zum einen die Masse des Zugfahrzeugs und zum anderen die des , Aufliegers beschreiben ermittelt. Für die Bestimmung der Massengrößen bietet sich folgende Vorgehensweise an. In Abhängigkeit der Radgeschwindigkeiten und der Antriebskraft, die aus dem vom Fahrer vorgegebenen Motormoment hergeleitet wird, wird für das Fahrzeuggespann eine Gesamtmasse ermittelt. Da bei einem Sattelauflieger die Masse des Zugfahrzeuges bekannt ist, kann somit auf die Masse des Aufliegers geschlossen werden. Handelt es sich um ein Fahrzeuggespann, welches aus einem Zugfahrzeug und einem Deichselanhänger besteht, so muß bei der Ermittlung der beiden Einzelmassen die Koppelkraft zwischen Zugfahrzeug und Deichselanhänger und die auf das Fahrzeuggespann wirkende Längsbeschleunigung berücksichtigt werden. Die Koppelkraft kann entweder unter Verwendung eines geeigneten Sensors oder durch ein geeignetes Schätzverfahren ermittelt werden. Alternativ bzw. ergänzend zu den Massengrößen können auch die für das Zugfahrzeug und den Auflieger jeweils geltenden Trägheitsmomente ermittelt werden.

Es werden Schwerpunktslagengrößen, die zum einen für das Zugfahrzeug die Lage des Schwerpunktes und zum anderen für den Auflieger die Lage des Schwerpunktes beschreiben ermittelt. Die beiden Schwerpunktslagengrößen können aus den Radlasten ermittelt werden, wenn das Fahrzeug beispielsweise geradeaus fährt und weder beschleunigt noch gebremst wird. Zur Ermittlung der Radlasten werden die Radgeschwindigkeiten ausgewertet.

Es werden Radkraftgrößen, die die auf die einzelnen Räder wirkenden Kräfte beschreiben, ermittelt. Es werden Schräglaufwinkelgrößen, die die Schräglaufwinkel der einzelnen Räder beschreiben, ermittelt. Die Radkraftgrößen und die Schräglaufwinkelgrößen werden wenigstens in Abhängigkeit der Querbeschleunigung, der Gierrate, des Lenkwinkels und der Fahrzeuggeschwindigkeit ermittelt.

Es wird eine Geschwindigkeitsgröße vf ermittelt, die die Fahrzeuggeschwindigkeit in Fahrzeuglängsrichtung beschreibt. Diese Geschwindigkeitsgröße vf wird in bekannter Weise aus den Radgeschwindigkeiten ermittelt. Ferner wird eine Geschwindigkeitsgröße vy ermittelt, die die Fahrzeuggeschwindigkeit in Fahrzeugquerrichtung beschreibt. Diese Geschwindigkeitsgröße kann durch Integration aus der Querbeschleunigung ermittelt werden.

Es wird in geeigneten Fahrsituationen eine Reibwertgröße ermittelt, die den Reibwert zwischen Reifen und Fahrbahn beschreibt. Die Reibwertgröße läßt sich in Abhängigkeit der Längsbeschleunigung, die aus den Radgeschwindigkeiten ermittelt wird und der Querbeschleunigung schätzen.

Außerdem wird eine Schwimmwinkelgröße ermittelt, die den Schwimmwinkel des Zugfahrzeuges beschreibt, und die für die Regelung erforderlich ist. Die Schwimmwinkelgröße wird in Abhängigkeit der Fahrzeugquergeschwindigkeit, der Fahrzeuglängsgeschwindigkeit und der Gierrate des Fahrzeuges ermittelt.

Ein Teil der im Block 301 erzeugten Signale bzw. Größen, nämlich Sxc1, wird einem Block 302 zugeführt. Um welche Signale bzw. Größen es sich dabei im einzelnen handelt, wird im Zusammenhang mit Figur 5 noch ausführlich beschrieben. Ein anderer Teil der im Block 301 erzeugten Signale bzw. Größen, nämlich Sxc2, wird einem Block 303 zugeführt. Bei diesen Größen Sxc2 handelt es sich um die für die Regelung benötigten Istwerte.

Bei dem Block 302 handelt es sich um das Referenzmodell, mit dem die charakteristischen Größen Sxd, d.h. die für die Regelung benötigten Sollwerte, ermittelt werden. Diese charakteristischen Größen werden dem Block 303 zugeführt. Block 303 stellt den eigentlichen Regler dar, der in Abhängigkeit der Istwerte Sxc2, d.h. den Fahrzeugbewegungsgrößen, und der charakteristischen Größen Sxd, d.h. der Sollwerte, die eigentliche Regelung durchführt und dabei die Größen deltaMMot und deltaPBrad ermittelt, die zur Durchführung der Regelungseingriffe der Aktuatorik 202 zugeführt werden. Der Regler kann als PD-Regler realisiert sein, für den ein Teil seiner Parameter beispielsweise in Abhängigkeit einer Reibwertgröße oder in Abhängigkeit von Radkraftgrößen ermittelt werden. Außerdem kann der Regler 303 auch eine Situationserkennung enthalten, mit der unter anderem die Fahrzeugsituation überwacht wird. In Abhängigkeit der Fahrzeugsituation werden entsprechende Beeinflussungen der Größen deltaMMot bzw. deltaPBrad durchgeführt.

Im folgenden wird auf Figur 4 eingegangen, in der der Regler 303 und die Aktuatorik 202 detaillierter dargestellt sind.

Der Regler 303 weist drei Einzelregler 401, 402 und 403 auf. Von diesen drei Einzelreglern ist der Einzelregler 401 den anderen beiden übergeordnet, d.h. die Einzelregler 402 und 403 werden von dem Einzelregler 401 beeinflußt.

Dem Einzelregler 401, der den Regler zur Durchführung der Fahrdynamikregelung darstellt, d.h. der die Regelung der Gierrate und des Schwimmwinkels des Zugfahrzeuges und des Knickwinkels durchführt, werden sowohl die Größen Sxc2, d.h. die Fahrzeugbewegungsgrößen, als auch die Größen Sxd, d.h. die charakteristischen Größen für die Fahrzeugbewegungsgrößen zugeführt. In Abhängigkeit der Größen Sxc2 und Sxd bildet der Einzelregler 401 die entsprechenden Regelabweichungen. Gemäß der in ihm implementierten Regelung setzt er die Regelabweichungen in zwei Größen Sxe bzw. Sxf um, von denen die Größen Sxe dem Einzelregler 402 zugeführt wird. Bei dem Einzelregler 402 handelt es sich um einen Bremsschlupfregler und bei den ihm zugeführten Größen Sxe um Größen, die den an den Rädern einzustellenden Bremsschlupf beschreiben.

Die mit Hilfe des Einzelreglers 401 erzeugten Größen Sxf, bei denen es sich um Größen handelt, die den an den Antriebsrädern einzustellenden Antriebsschlupf beschreiben, werden dem Einzelregler 403, einem Antriebsschlupfregler, zugeführt.

Weitere Größen, die den Einzelreglern 402 bzw. 403 zugeführt werden, sind in Figur 4 der Übersichtlichkeit halber nicht dargestellt, was allerdings keine Einschränkung darstellen soll. Bei den nicht dargestellten Größen handelt es sich beispielsweise um die Radgeschwindigkeiten der einzelnen Räder.

In dem Einzelregler 402 werden die ihm zugeführten Größen Sxe in Größen deltaPBradl umgesetzt, die einem in der Aktuatorik enthaltenen Block 404, einer elektropneumatischen Bremse, zugeführt werden. Bei der elektropneumatischen Bremse handelt es sich um eine Bremse, bei der die den einzelnen Rädern zugeordneten Ventile durch elektrische Signale zur Beeinflussung der in den Radbremszylindern enthaltenen Druckluft, die das Bremsmedium darstellt, betätigt werden.

Im Einzelregler 403 werden die ihm zugeführten Größen Sxf in Größen deltaPBrad2 sowie deltaMMot umgesetzt. Die Größen deltaPBrad 2 werden dem Block 404 und die Größen deltaMMot einem Block 405, der Motorbeeinflussungsmittel darstellt, zugeführt. An dieser Stelle sei erwähnt, daß die in Figur 4 enthaltenen Größen deltaPBrad 1 und deltaPBrad2 in den Figuren 2 bzw. 3 als Größen deltaPBrad zusammengefaßt sind.

Der Block 404 führt in Abhängigkeit der ihm zugeführten Größen delatPBradl, deltaPBrad2 sowie dem Vordruck PB die Bremseneingriffe durch. Block 405 führt in Abhängigkeit der ihm zugeführten Größen deltaMMot sowie dem vom Fahrer vorgegebenen Motormoment MMot die Eingriffe in den Vortrieb, genauer gesagt die Eingriffe in den Motor, durch.

Wie bereits weiter oben schon erwähnt, kann in der Aktuatorik 202 auch eine Vorrichtung zur Durchführung von Lenkungseingriffen enthalten sein. Da in Figur 4 auf die Berücksichtigung einer entsprechenden Vorrichtung verzichtet wurde, wird der Aktuatorik 202 auch nicht die Größe deltaz' zugeführt.

Nachfolgend wird auf Figur 5 eingegangen.

Die mit Hilfe der Sensorik 205b erfaßten Größen Sxb werden dem Block 301, der die Signalverarbeitung darstellt, zugeführt. Die mit Hilfe der Sensorik 205a erfaßten Größen Sxa werden sowohl dem Block 301 als auch der Aktuatorik 202 zugeführt.

Ausgehend von den ihm zugeführten Größen Sxa bzw. Sxb werden im Block 301 verschiedene Größen bzw. Signale erzeugt. Zum einen handelt es sich um die Fahrzeugbewegungsgröße omegaist, die die Gierrate des Zugfahrzeuges beschreibt, um die Fahrzeugbewegungsgröße betaist, die den Schwimmwinkel des Zugfahrzeuges beschreibt und um die Fahrzeugbewegungsgröße deltapsiist, die den Knickwinkel beschreibt. Diese drei Fahrzeugbewegungsgrößen werden dem Regler 313 zugeführt. Im Detail wird die Fahrzeugbewegungsgröße omegaist dem Differenzbildungsmittel 505, die Fahrzeugbewegungsgröße betaist dem Differenzbildungsmittel 506 und die Fahrzeugbewegungsgröße deltapsiist dem Differenzbildungsmittel 507 zugeführt. Diese drei Fahrzeugbewegungsgrößen entsprechen den jeweils für die Regelung erforderlichen Istwerten. In Figur 3 sind sie in den Größen Sxc2 enthalten.

Die beiden Fahrzeugbewegungsgrößen omegaist und deltapsiist gehen durch Filterung aus den entsprechenden Größen, die mit Hilfe des Gierratensensors bzw. dem Knickwinkelsensor ermittelt wurden, hervor. Die Fahrzeugbewegungsgröße betaist wird, wie oben beschrieben, durch Schätzung ermittelt.

Ferner werden im Block 301 eine Geschwindigkeitsgröße vf, die die Geschwindigkeit des Fahrzeuges beschreibt, und eine Lenkwinkelgröße deltaz, die den für das Zugfahrzeug eingestellten Lenkwinkel beschreibt, ermittelt. Beide Größen werden dem Regler 302, genauer gesagt den Bestimmungsmitteln 501, 502 sowie 503 zugeführt. Sowohl die Geschwindigkeitsgröße vf als auch die Lenkwinkelgröße deltaz sind in den in Figur 3 dargestellten Größen Sxc1 enthalten.

Darüber hinaus werden im Block 301 Größen Sxg erzeugt, die ebenfalls den Bestimmungsmitteln 501, 502 sowie 503 zugeführt werden. Die Größen Sxg sind in den in Figur 3 dargestellten Größen Sxc1 enthalten. Auf die einzelnen in den Größen Sxg enthaltenen Einzelgrößen wird weiter unten noch eingegangen.

Sofern die Zeitdauer, nach der die charakteristischen Größen den jeweiligen Endwert erreichen, nicht fest vorgegeben ist, wird diese Zeitdauer St im Block 301 beispielsweise in Abhängigkeit von der Fahrzeuggeschwindigkeit oder der Fahrzeugmasse ermittelt. Die so ermittelte Zeitdauer St wird einem Block 504, der noch zu beschrieben ist, zugeführt. Auch die Größe St ist in den in Figur 3 dargestellten Größen Sxcl enthalten.

In den Bestimmungsmitteln 501 wird in Abhängigkeit der ihnen zugeführten Geschwindigkeitsgröße vf und der Lenkwinkelgröße deltaz ein Endwert omegasolls für die charakteristische Größe omegasolld ermittelt. Zu diesem Zweck ist in den Bestimmungsmitteln 501 ein Fahrzeugmodell abgelegt, für welches die Geschwindigkeitsgröße vf und die Lenkwinkelgröße deltaz die Eingangsgrößen darstellen. Der Endwert omegasolls wird dem Block 504 zugeführt.

In entsprechender Weise wird mit Hilfe der Bestimmungsmittel 502 in Abhängigkeit der Geschwindigkeitsgröße vf und der Lenkwinkelgröße deltaz unter Verwendung eines Fahrzeugmodells ein Endwert betasolls für die charakteristische Größe betasolld ermittelt und mit Hilfe der Bestimmungsmittel 503 in Abhängigkeit der Geschwindigkeitsgröße vf und der Lenkwinkelgröße deltaz und unter Verwendung eines Fahrzeugmodells ein Endwert deltapsisolls für die charakteristische Größe deltapsisolld ermittelt. Beide Endwerte werden dem Block 504 zugeführt.

Obwohl den drei Bestimmungsmitteln 501, 502 und 503 dieselben Größen als Eingangsgrößen zugeführt werden, enthalten diese Bestimmungsmittel unterschiedliche Fahrzeugmodelle.

Wie bereits oben schon erwähnt, werden den Bestimmungsmitteln 501, 502 und 503 die Größen Sxg zugeführt. Zum einen sind in diesen Größen Sxg Einzelgrößen, wie beispielsweise die Querbeschleunigung bzw. die Längsbeschleunigung des Zugfahrzeuges, eine Reibwertgröße oder die geschätzten Radkräfte enthalten, in deren Abhängigkeit die einzelnen Endwerte, in erster Linie die Endwerte für die Gierrate und den Knickwinkel, je nach den vorliegenden Bedingungen auf physikalisch sinnvolle Werte begrenzt werden. In Abhängigkeit der Querbeschleunigung werden beispielsweise die Endwerte für die Gierrate bzw. für den Knickwinkel auf solche Werte begrenzt, bei denen keine Kippgefahr vorliegt. Zum anderen sind in den Größen Sxg Fahrzeuggrößen wie beispielsweise die beiden Massegrößen, die die Masse des Zugfahrzeuges bzw. die des Aufliegers beschreiben, oder die beiden Schwerpunktslagengrößen, die die Schwerpunktslage für das Zugfahrzeug bzw. den Auflieger beschreiben, enthalten.

In den Bestimmungsmitteln 501, 502 und 506 sind Fahrzeugparameter, die zum einen Geometrieparameter, die die Fahrzeuggeometrie beschreiben oder Reifenseitensteifigkeitsgrößen, die die Reifenseitensteifigkeiten der verwendeten Reifen beschreiben, abgelegt. Sowohl die Geometrieparameter als auch die Reifenseitensteifigkeitsgrößen werden im Vorfeld ermittelt. In Abhängigkeit der den Bestimmungsmitteln zugeführten Fahrzeuggrößen und in Abhängigkeit der Fahrzeugparameter werden verschiedene Parameter, die in den Fahrzeugmodellen enthalten sind, ermittelt. Durch diese Vorgehensweise werden die Fahrzeugmodelle beispielsweise an die aktuelle Beladung des Fahrzeuges angepaßt. Bei diesen Parametern der Fahrzeugmodelle handelt es sich beispielsweise um sogenannte Eigenlenkgradienten.

Anstelle der vorstehend beschriebenen Ermittlung der Parameter der Fahrzeugmodelle, bei der die Größen, von denen diese Parameter abhängen, geschätzt werden, bietet es sich alternativ an, diese Parameter direkt mit Hilfe eines geeigneten Schätzverfahrens zu ermitteln.

Block 504 stellt Anpassungsmittel dar, mit denen die zeitlichen Verläufe der charakteristischen Größen omegasolld, betasolld sowie deltapsisolld an das Fahrzeugverhalten angepaßt werden. Mit Hilfe der Anpassungsmittel 504 werden die charakteristischen Größen in Abhängigkeit des jeweiligen Endwertes ermittelt, d.h. die charakteristische Größe omegasolld wird in Abhängigkeit des Endwertes omegasolls, die charakteristische Größe betasolld wird in Abhängigkeit des Endwertes betasolls und die charakteristische Größe deltapsisolld wird in Abhängigkeit des Endwertes deltapsisolls ermittelt. Mit Hilfe der Anpassungsmittel 504 werden dabei die zeitlichen Verläufe der charakteristischen Größen dergestalt an das Fahrzeugverhalten angepaßt werden, daß die charakteristischen Größen erst nach einer vorgegebenen, für das Fahrzeug charakteristischen Zeitdauer, den jeweiligen Endwert erreichen. Wie bereits angedeutet, handelt es sich bei dieser Zeitdauer entweder um eine fest vorgegebene Zeitdauer oder es wird im Block 301 eine Zeitdauer St wenigstens in Abhängigkeit einer das Fahrzeugverhalten beschreibenden Größe ermittelt. Mit Hilfe der Anpassungsmittel 504 können entweder die zeitlichen Verläufe aller charakteristischen Größen in gleicher Weise an das Fahrzeugverhalten oder der zeitliche Verlauf jeder einzelnen charakteristischen Größe gesondert an das Fahrzeugverhalten angepaßt werden. Im ersten Fall ist die Zeitdauer für alle charakteristischen Größen gleich, im zweiten Fall ist die Zeitdauer für jede charakteristische Größe verschieden.

Bei den Anpassungsmitteln 504 handelt es sich um Filtermittel, die insbesondere als Tiefpaßfilter oder als Allpaßfilter ausgebildet sind. Durch die Vorgabe einer Filterkonstante werden die zeitlichen Verläufe der charakteristischen Größen beeinflußt. Die Filterkonstante entspricht dabei entweder direkt der fest vorgegebenen Zeitdauer oder der ermittelten Zeitdauer St oder sie wird in Abhängigkeit dieser Größen ermittelt.

Die charakteristische Größe omegasolld wird ausgehend von den Anpassungsmitteln 504 dem Differenzbildungsmittel 505 zugeführt. Mit Hilfe des Differenzbildungsmittels 505 wird in Abhängigkeit der charakteristischen Größe omegasolld und der Fahrzeugbewegungsgröße omegaist die Regelabweichung deltaomega für die Gierrate ermittelt, die einem Block 508 zugeführt wird. In entsprechender Weise wird die charakteristische Größe betasolld dem Differenzbildungsmittel 506 zugeführt und in Abhängigkeit von betasolld und der Fahrzeugbewegungsgröße betaist die Regelabweichung deltabeta für den Schwimmwinkel ermittelt, die ebenfalls dem Block 508 zugeführt wird. Ebenso wird die charakteristische Größe deltapsisolld dem Differenzbildungsmittel 507 zugeführt und in Abhängigkeit von deltapsisolld und der Fahrzeugbewegungsgröße deltapsiist die Regelabweichung deltadeltapsi für den Knickwinkel ermittelt, die ebenfalls dem Block 508 zugeführt wird.

Der Block 508 umfaßt einen in Figur 5 nicht dargestellten Einzelregler 401', der dem in Figur 4 enthaltenen Einzelregler 401 von der Funktion her entspricht. Allerdings sind bei dem im Block 508 enthaltenen Einzelregler 401' die im Einzelregler 401 enthaltenen Differenzbildungsmittel 505, 506 sowie 507 ausgelagert. Ferner umfaßt der Block 508 die in Figur 4 dargestellten Einzelregler 402 und 403. In Abhängigkeit der ihm zugeführten Regelabweichungen ermittelt der Block 508 die Größen deltaMMot und deltaPBrad. Diese Größen werden der Aktuatorik 202 zur Durchführung der erforderlichen Stabilisierungseingriffe zugeführt. Liegt beispielsweise ein Untersteuern des Zugfahrzeuges vor, so wird dessen kurveninneres Hinterrad gebremst, liegt dagegen ein Übersteuern des Zugfahrzeuges vor, so wird dessen kurvenäußeres Vorderrad gebremst. In beiden Fällen wird durch den radindividuellen Bremseneingriff ein Gegengiermoment erzeugt, welches dem Untersteuern bzw. Übersteuern entgegenwirkt.

Abschließend sei nochmals zusammengefaßt: Bei der erfindungsgemäßen Vorrichtung handelt es sich in um eine Vorrichtung, mit der das Fahrverhalten des Fahrzeuges so beeinflußt wird, daß die Stabilität und Beherrschbarkeit des Fahrzeuges in kritischen Situationen in Übereinstimmung mit dem Erfahrungshorizont des Fahrers gewährleistet ist. Mit den bisher bekannten Bremsschlupfregelsystemen und/oder Antriebsschlupfregelsystemen werden längsdynamisch kritische Situationen entschärft und stabilisierende Seitenkräfte aufrechterhalten. Dadurch bleibt die Lenkfähigkeit aufrechterhalten und die Traktion wird erhöht. Durch ein Fahrdynamiksystem wird der Fahrer darüber hinaus in beliebigen querdynamisch kritischen Situationen unterstützt und das Fahrzeug in allen Fahrsituationen stabilisiert. Insbesondere bei Sattelzügen wird das Fahrverhalten bei Spurwechseln, bei Kurvenfahrt und bei Lastwechseln verbessert. Außerdem wird ein Umkippen bzw. Einknicken des Sattelzuges vermieden.

Ausgehend von den für Personenkraftwagen bekannten Fahrdynamiksystemen gilt es mit Blick auf Nutzkraftwagen zu beachten, daß die Schwerpunktlage, die Masse und die Geometrie stark beladungsabhängig sind bzw. von der Aufliegerart beeinflußt wird.

An dieser Stelle sei nochmals bemerkt, daß die erfindungsgemäße Vorrichtung sowohl für ein Fahrzeuggespann als auch für ein Solofahrzeug einsetzbar ist. Bei einem Fahrzeuggespann werden die Gierrate und der Schwimmwinkel des Zugfahrzeuges sowie der Knickwinkel geregelt. Bei einem Solofahrzeug werden sowohl die Gierrate als auch der Schwimmwinkel geregelt.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

## Patentansprüche

1. Vorrichtung zur Stabilisierung eines Fahrzeuges (101, 102),
die erste Ermittlungsmittel (205a, 205b, 301) enthält, mit denen wenigstens zwei Fahrzeugbewegungsgrößen (omegaist, betaist, deltapsiist), die die Fahrzeugbewegung, insbesondere in Fahrzeugquerrichtung, beschreiben, ermittelt werden,
die zweite Ermittlungsmittel (302) enthält, mit denen für jede der Fahrzeugbewegungsgrößen eine charakteristische Größe (omegasolld, betasolld, deltapsisolld) ermittelt wird, wobei die zweiten Ermittlungsmittel Anpassungsmittel (504) enthalten, mit denen die zeitlichen Verläufe der charakteristischen Größen an das Fahrzeugverhalten angepaßt werden, und
die Reglermittel (303) enthält, mit denen wenigstens in Abhängigkeit der Fahrzeugbewegungsgrößen und der charakteristischen Größen Eingriffsgrößen (deltaMMot, deltaPBrad) ermittelt werden, die Aktuatormitteln (202) zur Durchführung von wenigstens Bremseneingriffen und/oder Motoreingriffen, mit denen das Fahrzeug stabilisiert wird, zugeführt werden.

2. Vorrichtung nach Anspruch 1, **dadurch gekennzeichnet, daß** die zweiten Ermittlungsmittel Bestimmungsmittel (501, 502, 503) enthalten, mit denen Endwerte (omegasolls, betasolls, deltapsisolls) für die charakteristischen Größen ermittelt werden, wobei diese Endwerte den Anpassungsmitteln zugeführt werden und die charakteristischen Größen in Abhängigkeit dieser Endwerte ermittelt werden.

3. Vorrichtung nach Anspruch 2, **dadurch gekennzeichnet, daß** die Endwerte wenigstens in Abhängigkeit einer Lenkwinkelgröße (deltaz), die den für das Fahrzeug eingestellten Lenkwinkel beschreibt, und einer Geschwindigkeitsgröße (vf), die die Geschwindigkeit des Fahrzeuges beschreibt, ermittelt werden, insbesondere entsprechen die Endwerte den Werten der Fahrzeugbewegungsgrößen, die in einem stationären Zustand des Fahrzeuges vorliegen.

4. Vorrichtung nach Anspruch 2, **dadurch gekennzeichnet, daß** mit den Anpassungsmitteln die zeitlichen Verläufe der charakteristischen Größen dergestalt an das Fahrzeugverhalten angepaßt werden, daß die charakteristischen Größen erst nach einer vorgegebenen, für das Fahrzeug charakteristischen Zeitdauer den jeweiligen Endwert erreichen.

5. Vorrichtung nach Anspruch 4, **dadurch gekennzeichnet, daß** die Zeitdauer fest vorgegeben ist oder daß die Zeitdauer (St) wenigstens in Abhängigkeit einer das Fahrzeugverhalten beschreibenden Größe ermittelt wird.

6. Vorrichtung nach Anspruch 1, **dadurch gekennzeichnet, daß** mit den Anpassungsmitteln die zeitlichen Verläufe aller charakteristischen Größen in gleicher Weise an das Fahrzeugverhalten angepaßt werden, oder
daß mit den Anpassungsmitteln der zeitliche Verlauf jeder einzelnen charakteristischen Größe gesondert an das Fahrzeugverhalten angepaßt wird.

7. Vorrichtung nach Anspruch 4 und 6, **dadurch gekennzeichnet,**
**daß** für den Fall, bei dem die zeitlichen Verläufe aller charakteristischer Größen in gleicher Weise an das Fahrzeugverhalten angepaßt werden, die Zeitdauer für alle charakteristischen Größen gleich ist, oder
**daß** für den Fall, bei dem der zeitliche Verlauf jeder einzelnen charakteristischen Größe gesondert an das Fahrzeugverhalten angepaßt wird, die Zeitdauer für jede charakteristische Größe verschieden ist.

8. Vorrichtung nach Anspruch 1, **dadurch gekennzeichnet, daß** die Anpassungsmittel als Filtermittel, insbesondere als Tiefpaßfilter oder als Allpaßfilter, ausgebildet sind, mit denen über die Vorgabe einer Filterkonstante die zeitlichen Verläufe der charakteristischen Größen beeinflußt werden.

9. Vorrichtung nach Anspruch 3, **dadurch gekennzeichnet, daß** die Endwerte mit Hilfe von Fahrzeugmodellen ermittelt werden, wobei ein Teil der in diesen Fahrzeugmodellen verwendeten Parameter wenigstens in Abhängigkeit von Fahrzeuggrößen und/oder Fahrzeugparametern ermittelt wird.

10. Vorrichtung nach Anspruch 9, **dadurch gekennzeichnet, daß** als Fahrzeuggrößen wenigstens eine Massengröße und/oder wenigstens eine Schwerpunktslagengröße eingehen, und/oder daß als Fahrzeugparameter Geometrieparameter und/oder Reifenseitensteifigkeitsgrößen eingehen.

11. Vorrichtung nach Anspruch 1, **dadurch gekennzeichnet, daß** die Reglermittel verschiedene Einzelregler aufweisen, von denen zumindest einer (401) die anderen (402, 403) beeinflußt, und/oder von denen einer (401) den anderen (402, 403) übergeordnet ist.

12. Vorrichtung nach Anspruch 2, **dadurch gekennzeichnet, daß** zumindest für einen Teil der Endwerte eine Begrenzung ihres Wertes durchgeführt wird, insbesondere wird die Begrenzung in Abhängigkeit einer Querbeschleunigungsgröße und/oder einer Längsbeschleunigungsgröße, die die auf das Fahrzeug jeweils wirkende Querbeschleunigung und/oder Längsbeschleunigung beschreibt, oder in Abhängigkeit einer Reibwertgröße oder in Abhängigkeit von Radkraftgrößen, die die auf die Räder des Fahrzeuges wirkenden Kräfte beschreiben, durchgeführt.

13. Vorrichtung nach Anspruch 1, **dadurch gekennzeichnet, daß** das Fahrzeug ein Fahrzeuggespann ist, welches aus einem Zugfahrzeug (101) und einem Anhänger bzw. Auflieger (102) besteht, und
daß mit den ersten Ermittlungsmitteln drei Fahrzeugbewegungsgrößen ermittelt werden, wobei zwei dieser Fahrzeugbewegungsgrößen (omegaist, betaist) das Verhalten des Zugfahrzeuges beschreiben und eine dieser Fahrzeugbewegungsgrößen (deltapsiist) die Lage und/oder das Verhalten des Anhängers bzw. Aufliegers bzgl. des Zugfahrzeuges beschreibt.

14. Vorrichtung nach Anspruch 13, **dadurch gekennzeichnet, daß** als eine erste Fahrzeugbewegungsgröße eine Giergeschwindigkeitsgröße (omegaist), die die Giergeschwindigkeit des Zugfahrzeuges beschreibt, ermittelt wird, und/oder
daß als eine zweite Fahrzeugbewegungsgröße eine Schwimmwinkelgröße (betaist), die den Schwimmwinkel des Fahrzeuges beschreibt, ermittelt wird, und/oder
daß als eine dritte Fahrzeugbewegungsgröße eine Knickwinkelgröße, die den sich zwischen Zugfahrzeug und Anhänger bzw. Auflieger einstellenden Knickwinkel beschreibt, ermittelt wird.

15. Verfahren zur Stabilisierung eines Fahrzeuges (101, 102),
bei dem wenigstens zwei Fahrzeugbewegungsgrößen (omegaist, betaist, deltapsiist), die die Fahrzeugbewegung, insbesondere in Fahrzeugquerrichtung, beschreiben, ermittelt werden, bei dem für jede der Fahrzeugbewegungsgrößen eine charakteristische Größe (omegasolld, betasolld, deltapsisolld) ermittelt wird, wobei die zeitlichen Verläufe der charakteristischen Größen an das Fahrzeugverhalten angepaßt werden, und
bei dem wenigstens in Abhängigkeit der Fahrzeugbewegungsgrößen und der charakteristischen Größen Eingriffsgrößen (deltaMMot, deltaPBrad) ermittelt werden, in deren Abhängigkeit wenigstens Bremseneingriffe und/oder Motoreingriffe, mit denen das Fahrzeug stabilisiert wird, durchgeführt werden.

## Claims

1. Apparatus for stabilizing a vehicle (101, 102), which apparatus comprises first determination means (205a, 205b, 301), using which at least two vehicle-movement variables (omegaist, betaist, deltapsiist) are determined which describe the vehicle movement, in particular in the transverse direction of the vehicle, which apparatus comprises second determination means (302), using which a characteristic variable (omegasolld, betasolld, deltapsisolld) is determined for each of the vehicle-movement variables, the second determination means comprising matching means (504), using which the time curves of the characteristic variables are matched to the vehicle behaviour, and which apparatus comprises regulator means (303), using which intervention variables (deltaMMot, deltaPBrad) are determined at least as a function of the vehicle-movement variables and of the characteristic variables, the said intervention variables being fed to actuator means (202) for carrying out at least braking interventions and/or engine interventions, using which the vehicle is stabilized.

2. Apparatus according to Claim 1, **characterized in that** the second determination means comprise setting means (501, 502, 503), using which final values (omegasolls, betasolls, deltapsisolls) are determined for the characteristic variables, these final values being fed to the matching means and the characteristic variables being determined as a function of these final values.

3. Apparatus according to Claim 2, **characterized in that** the final values are determined at least as a function of a steering-angle variable (deltaz), which describes the steering angle which has been set for the vehicle, and a speed variable (vf), which describes the speed of the vehicle, and the final values correspond, in particular, to the values of the vehicle-movement variables which are present in a stationary state of the vehicle.

4. Apparatus according to Claim 2, **characterized in that** the time curves of the characteristic variables are matched to the vehicle behaviour using the matching means in such a way that the characteristic variables reach the respective final value only after a predefined time duration which is characteristic for the vehicle.

5. Apparatus according to Claim 4, **characterized in that** the time duration is predetermined fixedly, or **in that** the time duration (St) is determined at least as a function of a variable which describes the vehicle behaviour.

6. Apparatus according to Claim 1, **characterized in that** the time curves of all the characteristic variables are matched to the vehicle behaviour in the same way using the matching means, or **in that** the time curve of each individual characteristic variable is matched separately to the vehicle behaviour using the matching means.

7. Apparatus according to Claims 4 and 6, **characterized in that** the time duration for all the characteristic variables is equal for the case in which the time curves of all the characteristic variables are matched to the vehicle behaviour in the same way, or **in that** the time duration for each characteristic variable is different for the case in which the time curve of each individual characteristic variable is matched separately to the vehicle behaviour.

8. Apparatus according to Claim 1, **characterized in that** the matching means are configured as filter means, in particular as low-pass filters or as all-pass filters, using which the time curves of the characteristic variables are influenced via the stipulation of a filter constant.

9. Apparatus according to Claim 3, **characterized in that** the final values are determined with the aid of vehicle models, part of the parameters which are used in these vehicle models being determined at least as a function of vehicle variables and/or vehicle parameters.

10. Apparatus according to Claim 9, **characterized in that** at least one mass variable and/or at least one centroid variable are/is included as vehicle variables, and/or **in that** geometry parameters and/or tyre sidewall rigidity variables are included as vehicle parameters.

11. Apparatus according to Claim 1, **characterized in that** the regulator means have various individual regulators, of which at least one (401) influences the others (402, 403), and/or of which one (401) is made superordinate to the others (402, 403).

12. Apparatus according to Claim 2, **characterized in that** the value of at least part of the final values is limited, and the limitation is carried out, in particular, as a function of a transverse-acceleration variable and/or a longitudinal-acceleration variable which describes the transverse acceleration and/or longitudinal acceleration acting in each case on the vehicle, or as a function of a frictional-value variable or as a function of wheel-force variables which describe the forces acting on the wheels of the vehicle.

13. Apparatus according to Claim 1, **characterized in that** the vehicle is a vehicle combination which comprises a towing vehicle (101) and a trailer or semitrailer (102), and **in that** three vehicle-movement variables are determined using the first determination means, two of these vehicle-movement variables (omegaist, betaist) describing the behaviour of the towing vehicle and one of these vehicle-movement variables (deltapsiist) describing the position and/or the behaviour of the trailer or semitrailer with regard to the towing vehicle.

14. Apparatus according to Claim 13, **characterized in that** a yaw-speed variable (omegaist) which describes the yaw speed of the towing vehicle is determined as a first vehicle-movement variable, and/or **in that** an attitude-angle variable (betaist) which describes the attitude angle of the vehicle is determined as a second vehicle-movement variable, and/or **in that** a trailer-angle variable which describes the trailer angle which occurs between the towing vehicle and the trailer or semitrailer is determined as a third vehicle-movement variable.

15. Method for stabilizing a vehicle (101, 102), in which at least two vehicle-movement variables (omegaist, betaist, deltapsiist) are determined which describe the vehicle movement, in particular in the transverse direction of the vehicle, in which a characteristic variable (omegasolld, betasolld, deltapsisolld) is determined for each of the vehicle-movement variables, the time curves of the characteristic variables being matched to the vehicle behaviour, and in which intervention variables (deltaMMot, deltaPBrad) are determined at least as a function of the vehicle-movement variables and the characteristic variables, as a function of which intervention variables at least braking interventions and/or engine interventions are carried out, using which the vehicle is stabilized.

## Revendications

1. Dispositif de stabilisation d'un véhicule (101, 102) comportant :
- des premiers moyens de détermination (205a, 205b, 301) permettant de déterminer au moins deux grandeurs relatives au mouvement du véhicule (oméga réel, beta réel, delta psi réel) qui décrivent le mouvement du véhicule notamment dans la direction transversale du véhicule,
- des seconds moyens de détermination (302) à l'aide desquels on détermine une grandeur caractéristique (oméga cons d, beta cons d, delta psi cons d) pour chacune des grandeurs de mouvement du véhicule,
les moyens de détermination comportant des moyens d'adaptation (504) à l'aide desquels on adapte l'évolution chronologique des grandeurs caractéristiques au comportement du véhicule, et
des moyens de régulation (303) à l'aide desquels, au moins en fonction des grandeurs de mouvement du véhicule et des grandeurs caractéristiques on détermine des grandeurs d'intervention (delta Mot, delta PBrad) qui sont appliquées à des moyens d'actionnement (202) pour effectuer au moins des interventions de freinage et/ou des interventions dans le moteur pour stabiliser le véhicule.

2. Dispositif selon la revendication 1,
**caractérisé en ce que**
les seconds moyens de détermination comportent des moyens de définition (501, 502, 503) à l'aide desquels on définit les valeurs finales (omégaconss, betaconss, deltapsiconss) pour les grandeurs caractéristiques, ces valeurs finales étant appliquées aux moyens d'adaptation et les grandeurs caractéristiques étant déterminées en fonction de ces valeurs finales.

3. Dispositif selon la revendication 2,
**caractérisé en ce que**
les valeurs finales sont déterminées au moins en fonction d'une grandeur d'angle de braquage (delta z) décrivant l'angle de braquage réglé pour le véhicule et une grandeur de vitesse (vf) décrivant la vitesse du véhicule, notamment correspondant aux valeurs finales des valeurs des grandeurs de mouvement du véhicule existant à l'état stationnaire du véhicule.

4. Dispositif selon la revendication 2,
**caractérisé en ce que**
les moyens d'adaptation adaptent les évolutions chronologiques des grandeurs caractéristiques au comportement du véhicule pour que ces grandeurs caractéristiques n'atteignent la valeur finale respective qu'après une durée prédéfinie, caractéristique du véhicule.

5. Dispositif selon la revendication 4,
**caractérisé en ce que**
la durée est prédéfinie de manière fixe, ou la durée (st) est déterminée au moins en fonction d'une grandeur décrivant le comportement du véhicule.

6. Dispositif selon la revendication 1,
**caractérisé en ce que**
les moyens d'adaptation adaptent les évolutions chronologiques de toutes les grandeurs caractéristiques de la même manière au comportement du véhicule, ou
les moyens d'adaptation adaptent l'évolution chronologique de chacune des grandeurs caractéristiques, séparément au comportement du véhicule.

7. Dispositif selon la revendication 4 ou 6,
**caractérisé en ce qu'**
au cas où les évolutions chronologiques de toutes les grandeurs caractéristiques sont adaptées de la même manière au comportement du véhicule, la durée de toutes les grandeurs caractéristiques est identique, ou
au cas où l'évolution chronologique de chacune des grandeurs caractéristiques prises séparément est adaptée séparément au comportement du véhicule, la durée de chacune des grandeurs caractéristiques est différente.

8. Dispositif selon la revendication 1,
**caractérisé en ce que**
les moyens d'adaptation sont des moyens de filtrage notamment sous la forme d'un filtre passe bas ou d'un filtre passe tout permettant d'influencer l'évolution chronologique des grandeurs caractéristiques en définissant au préalable une constante de filtre.

9. Dispositif selon la revendication 3,
**caractérisé en ce qu'**
on détermine les valeurs finales à l'aide des modèles de véhicule et une partie des paramètres utilisés dans ces modèles de véhicules sont déterminés au moins en fonction des grandeurs du véhicule et/ou des paramètres du véhicule.

10. Dispositif selon la revendication 9,
**caractérisé en ce que**
comme grandeur du véhicule on utilise au moins une grandeur représentant la masse et/ou au moins une grandeur représentant la position du centre de gravité, et/ou comme paramètre du véhicule on utilise des paramètres géométriques et/ou les grandeurs de rigidité latérale des pneumatiques.

11. Dispositif selon la revendication 1,
**caractérisé en ce que**
les moyens de régulation comportent différents régulateurs distincts dont au moins l'un (401) influence les autres (402, 403) et/ou dont au moins l'un (401) est dominant par rapport aux autres (402, 403).

12. Dispositif selon la revendication 2,
**caractérisé en ce que**
pour au moins une partie des valeurs finales, on limite leur valeur, notamment en fonction d'une grandeur d'accélération transversale et/ou d'une grandeur d'accélération longitudinale qui décrit l'accélération transversale et/ou l'accélération longitudinale appliquée au véhicule, ou en fonction d'une grandeur de coefficient d'adhérence ou en fonction d'une grandeur de force de roue décrivant les forces agissant sur les roues du véhicule.

13. Dispositif selon la revendication 1,
**caractérisé en ce que**
le véhicule est un train routier composé d'un véhicule tracteur (101) et d'une remorque ou d'une semi-remorque (102), et
à l'aide des premiers moyens de détermination on détermine trois grandeurs de mouvement du véhicule,
deux de ces grandeurs de mouvement du véhicule (oméga réel, beta réel) décrivant le comportement du tracteur et l'une des grandeurs de mouvement du véhicule (delta psi réel) décrivant la position et/ou le comportement de la remorque ou de la semi-remorque ou du tracteur.

14. Dispositif selon la revendication 13,
**caractérisé en ce que**
comme première grandeur de mouvement du véhicule on utilise une grandeur relative à la vitesse de lacet (oméga réel) qui décrit la vitesse de lacet du véhicule tracteur, et/ou comme seconde grandeur de mouvement du véhicule on utilise une grandeur d'angle de flottement (beta réel) qui décrit l'angle de flottement du véhicule, et/ou
comme troisième grandeur de mouvement du véhicule on utilise une grandeur d'angle de pliage qui décrit l'angle de pliage entre le véhicule tracteur et la remorque ou la semi-remorque.

15. Procédé de stabilisation d'un véhicule (101, 102), selon lequel
- on détermine au moins deux grandeurs de mouvement du véhicule (oméga réel, beta réel, delta psi réel) décrivant le mouvement du véhicule notamment dans la direction transversale du véhicule,
- pour chacune des grandeurs de mouvement du véhicule on détermine une grandeur caractéristique (oméga cons d, beta cons d, delta psi cons d) et on adapte l'évolution chronologique des grandeurs caractéristiques au comportement du véhicule, et
- au moins en fonction des grandeurs de mouvement du véhicule et des grandeurs caractéristiques on détermine des grandeurs d'intervention (delta MMot, delta PBrad) en fonction desquelles on effectue au moins une action de freinage et/ou une action sur le moteur pour stabiliser le véhicule.
